# EUROPÄISCHE PATENTSCHRIFT

(11) **EP 3 106 016 B1**
(45) Veröffentlichungstag und Bekanntmachung des Hinweises auf die Patenterteilung: **24.07.2019**
(21) Anmeldenummer: 16174012.1
(22) Anmeldetag: 10.06.2016
(51) Int. Cl.: A01D 45/00, A01D 45/06, A01G 23/093

(54) **ERNTEVORRICHTUNG, INSBESONDERE ZU EINER ERNTE VON KURZUMTRIEBSGEWÄCHSEN**
HARVESTING DEVICE, IN PARTICULAR FOR HARVESTING SHORT ROTATION CROPS
DISPOSITIF DE CUEILLETTE, EN PARTICULIER POUR UNE RECOLTE DE PLANTES A CYCLE COURT

(30) Priorität: 17.06.2015 DE 102015109711
(43) Veröffentlichungstag der Anmeldung: 21.12.2016
(73) Patentinhaber: Wimatec Mattes GmbH, 88356 Ostrach (DE)
(72) Erfinder: Mattes, Stefan, 88356 Ostrach (DE)
(74) Vertreter: Daub, Thomas

(56) Entgegenhaltungen:
- EP-A1- 0 943 230
- EP-A1- 2 193 706
- EP-A1- 2 301 320
- DE-A1- 2 458 207
- DE-U1-202007 007 213

## Beschreibung

### Stand der Technik

Die Erfindung betrifft eine Erntevorrichtung nach dem Oberbegriff des Patentanspruchs 1.

Aus der DE 24 58 207 A1 ist bereits eine fahrbare Erntevorrichtung mit einer Rodemaschine, welche zur Ernte von Kurzumtriebsgewächsen vorgesehen ist, bekannt, welche einen Sägebereich mit einer Sägeeinheit und einen Gewächsführungsbereich mit einem Auslenkmittel aufweist, welches zu einem Auslenken und Vorspannen der Kurzumtriebsgewächse vor dem Sägebereich der Sägeeinheit vorgesehen ist, wobei das Auslenken und Vorspannen der Kurzumtriebsgewächse in einer Richtung parallel zu einer Hauptbewegungsrichtung vorgesehen ist.

Aus der EP 2 193 706 A1 ist eine Erntevorrichtung mit einer Sägeeinheit und einem Auslenkmittel zum Auslenken und Neigen von Kurzumtriebsgewächsen in eine Richtung parallel zur Hauptbewegungsrichtung bekannt.

Die EP 2 301 320 A1 offenbart eine Hackvorrichtung mit einer Hackeinheit und einer Auslenkeinheit, wobei die Auslenkeinheit zumindest zwei als Einzugshaspeln ausgebildete Auslenkmittel aufweist, welche dazu vorgesehen sind, die zu erntenden Kurzumtriebsgewächse in eine Richtung parallel zur Hauptbewegungsrichtung auszulenken.

Aus der DE 20 2007 007 213 U1 ist eine Häckselmaschine mit einem Häckselwerk und einem Auslenkmittel bekannt, wobei mittels des Auslenkmittels zu erntende Kurzumtriebsgewächse in eine Richtung parallel zu der Hauptbewegungsrichtung ausgelenkt und dem Häckselwerk zugeführt werden.

Die Aufgabe der Erfindung besteht insbesondere darin, eine gattungsgemäße Erntevorrichtung bereitzustellen, die eine besonders betriebssichere Ernte von Kurzumtriebsgewächsen ermöglicht. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Erntevorrichtung, insbesondere zu einer Ernte von Kurzumtriebsgewächsen, mit einer Gewächsführungseinheit, die zu einem Auslenken der Kurzumtriebsgewächse vor einem Sägebereich einer Sägeeinheit vorgesehen ist, wobei die Gewächsführungseinheit zumindest ein Auslenkmittel umfasst, das zu einem Auslenken und Vorspannen der Kurzumtriebsgewächse vor dem Sägebereich der Sägeeinheit in eine Querrichtung vorgesehen ist.

Es wird vorgeschlagen, dass das zumindest eine Auslenkmittel zu einer Auslenkung der Kurzumtriebsgewächse weg von einer Mittelachse, die parallel zu einer Hauptbewegungsrichtung und durch einen Mittelpunkt der Sägeeinheit verläuft, vorgesehen ist. Dadurch kann ein Auslenken der Kurzumtriebsgewächse in Richtung anderer Kurzumtriebsgewächse
vermieden werden. Es kann das zu erntende Kurzumtriebsgewächs besonders weit von einem nicht zu erntenden Bestand an Kurzumtriebsgewächsen entfernt werden. Ein Verhaken von Kurzumtriebsgewächsen ineinander kann vorteilhaft reduziert oder vermieden werden. Ein Erntevorgang der Kurzumtriebsgewächse kann dadurch besonders betriebssicher und effizient durchgeführt werden. Die Kurzumtriebsgewächse bilden vorteilhaft Weiden und/oder Pappeln aus. Unter einem "Auslenken" soll in diesem Zusammenhang insbesondere ein Verbiegen verstanden werden. Insbesondere verbleibt ein Wurzelbereich eines Kurzumtriebsgewächses ortsfest in einem Erdboden, während ein oberer Bereich des Kurzumtriebsgewächses elastisch ausgelenkt wird. In einer zusätzlichen Ausgestaltung der Erfindung wird vorgeschlagen, dass die Gewächsführungseinheit eine Haspel, eine Schnecke, eine Querförderkette und/oder eine Walze umfasst. Die Haspel, die Schnecke, die Querförderkette und/oder die Walze kann motorisch antreibbar oder frei drehbar ausgebildet sein. Die Haspel, die Schnecke, die Querförderkette und/oder die Walze kann vorzugsweise in einem Normalbetrieb und in einem Reversierbetrieb betrieben werden. Die Querförderkette kann vorteilhaft Mitnehmer aufweisen.

Die Gewächsführungseinheit ist dazu vorgesehen, vor einem Sägevorgang in Anlage mit den Kurzumtriebsgewächsen in einem Bereich zu kommen, der von einem Erdboden aus betrachtet oberhalb einer Schnittebene der Sägeeinheit angeordnet ist. Die Gewächsführungseinheit ist dazu vorgesehen die Kurzumtriebsgewächse vor einem Sägevorgang vorzuspannen. Unter einer "Sägeeinheit" soll in diesem Zusammenhang insbesondere eine Einheit verstanden werden, die dazu vorgesehen ist, verwurzelte Kurzumtriebsgewächse abzusägen. Vorteilhaft weist die Sägeeinheit zwei rotierende Sägeblätter auf. Unter einem "Sägebereich" soll in diesem Zusammenhang insbesondere ein Bereich verstanden, der sich entlang einer Sägelinie der Sägeeinheit erstreckt. Unter einer "Querrichtung" soll in diesem Zusammenhang eine Richtung verstanden werden, die zumindest im Wesentlichen senkrecht zu einer Fahrtrichtung und parallel zu einem Erdboden verläuft. Vorteilhaft verläuft die Querrichtung senkrecht zu einer Pflanzreihe von durch die Erntevorrichtung zu erntenden Kurzumtriebsgewächsen.

Der Mittelpunkt der Sägeeinheit bildet insbesondere einen von zwei Schnittpunkten von Sägekreisen der zwei Sägeblätter der Sägeeinheit.

Die Erntevorrichtung wird in einem normalen Erntebetrieb in Fahrtrichtung bewegt. Die Erntevorrichtung ist vorzugsweise zu einer lösbaren Kopplung mit einem Fahrzeug, insbesondere einem Feldhäcksler, vorgesehen.

Weiterhin ist die Erntevorrichtung vorteilhaft zu einer Kopplung mit einem Nebenabtrieb des Fahrzeugs vorgesehen. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

In einer weiteren Ausgestaltung der Erfindung wird vorgeschlagen, dass das zumindest eine Auslenkmittel in einer Haupterstreckungsrichtung einen spitzen Winkel zur Querrichtung einschließt. Dadurch kann die Gewächsführungseinheit besonders konstruktiv einfach und langlebig ausgebildet werden. Unter einer "Haupterstreckungsrichtung" soll in diesem Zusammenhang insbesondere eine Richtung verstanden werden, die zumindest im Wesentlichen parallel zu einer maximalen Erstreckungslinie des zumindest einen Auslenkmittels verläuft. Der Winkel weist vorzugsweise einen Wert zwischen 15° und 30° auf.

Des Weiteren wird vorgeschlagen, dass das zumindest eine Auslenkmittel rohrförmig ausgebildet ist. Dadurch kann die Gewächsführungseinheit besonders leicht und gleichzeitig robust ausgestaltet werden. Alternativ ist es auch denkbar, dass das zumindest eine Auslenkmittel stangenförmig ausgebildet ist.

Ferner wird vorgeschlagen, dass das zumindest eine Auslenkmittel zumindest ein abgekröpftes Ende aufweist. Dadurch kann ein Abrutschen von Kurzumtriebsgewächsen von dem zumindest einen Auslenkmittel vorteilhaft vermieden werden. Besonders vorteilhaft weist das zumindest eine Auslenkmittel zwei abgekröpfte Enden auf.

Weiterhin wird vorgeschlagen, dass das zumindest eine Auslenkmittel schwenkbar ausgebildet ist. Dadurch kann die Gewächsführungseinheit vorteilhaft an eine Position der Erntevorrichtung relativ zu einem Bestand an Kurzumtriebsgewächsen angepasst werden. Besonders vorteilhaft ist das zumindest eine Auslenkmittel zumindest um eine Hochachse schwenkbar ausgebildet. Es ist in diesem Zusammenhang jedoch auch denkbar, dass das zumindest eine Auslenkmittel um eine Querachse und/oder um eine Längsachse schwenkbar ausgebildet ist. Besonders vorteilhaft weist die Gewächsführungseinheit ein Schwenklager auf, an welchem das zumindest eine Auslenkmittel schwenkbar gelagert ist.

Zudem wird vorgeschlagen, dass das zumindest eine Auslenkmittel motorisch schwenkbar ausgebildet ist. Dadurch kann eine Anpassung der Gewächsführungseinheit an eine Position der Erntevorrichtung relativ zu einem Bestand an Kurzumtriebsgewächsen besonders komfortabel und schnell vorgenommen werden.

Ferner wird vorgeschlagen, dass der Winkel zwischen der Haupterstreckungsrichtung des Auslenkmittels und der Querrichtung einstellbar ist. Dadurch kann eine besonders präzise Anpassung der Gewächsführungseinheit an eine Betriebsbedingung vorgenommen werden.

Des Weiteren wird vorgeschlagen, dass das zumindest eine Auslenkmittel hydraulisch verstellbar ausgebildet ist. Dadurch kann eine besonders zuverlässige Verstellung des zumindest einen Auslenkmittels erzielt werden. Weiterhin vorteilhaft weist die Gewächsführungseinheit einen Hydraulikzylinder auf, der zu einem Verschwenken des zumindest einen Auslenkmittels vorgesehen ist. Alternativ und/oder zusätzlich ist es auch denkbar, dass das zumindest eine Auslenkmittel pneumatisch und/oder elektrisch verstellbar ausgebildet ist.

Des Weiteren wird ein System mit einer erfindungsgemäßen Erntevorrichtung und mit einer Steuerungseinheit, die zu einer Fernbedienung der Gewächsführungseinheit durch einen Bediener vorgesehen ist, vorgeschlagen. Dadurch kann eine besonders komfortable Bedienung der Erntevorrichtung erzielt werden. Die Erntevorrichtung kann vorteilhaft ohne ein Verlassen eines Fahrerhauses bedient werden. Dadurch kann eine Betriebssicherheit vorteilhaft erhöht werden. Es ist in diesem Zusammenhang denkbar, dass die Steuerungseinheit dazu vorgesehen ist, die Gewächsführungseinheit vollautomatisch, teilautomatisch und/oder manuell anzusteuern.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Erntevorrichtung und einen zu erntenden Bestand an Kurzumtriebsgewächsen in einer schematische Draufsicht,
- Fig. 2: die Erntevorrichtung mit einer Gewächsführungseinheit in einer perspektivischen Darstellung und
- Fig. 3: einen Teil der Gewächsführungseinheit in einer Draufsicht.

### Beschreibung des Ausführungsbeispiels

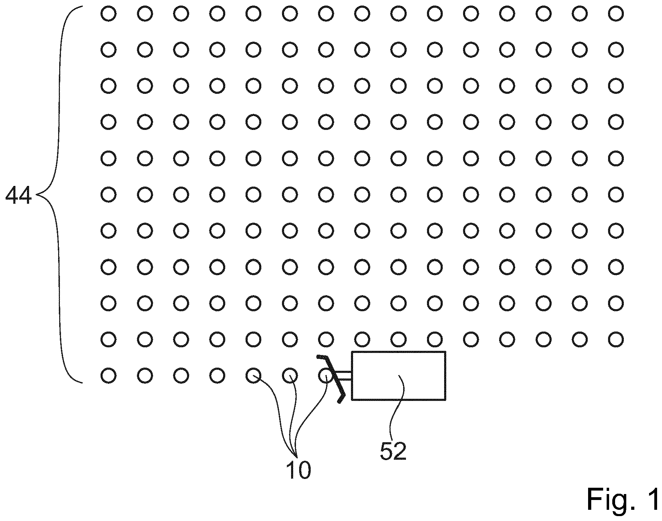

Die Figur 1 zeigt eine Erntevorrichtung zu einer Ernte von verwurzelten Kurzumtriebsgewächsen 10. Die Kurzumtriebsgewächse 10 bilden in ihrer Gesamtheit einen Bestand 44 aus. Die Kurzumtriebsgewächse 10 sind üblicherweise von Weiden und/oder Pappeln gebildet. Die Erntevorrichtung ist zu einer lösbaren Kopplung mit einem Feldhäcksler 52 vorgesehen. Die Erntevorrichtung wird hierbei mit einem Nebenabtrieb des Feldhäckslers 52 gekoppelt. Die Kurzumtriebsgewächse 10 sind in parallel zueinander verlaufenden Pflanzreihen angeordnet. Die Erntevorrichtung ist zu einer Ernte der Kurzumtriebsgewächse 10 vorgesehen, die eine äußere Grenze des Bestandes 44 bilden.

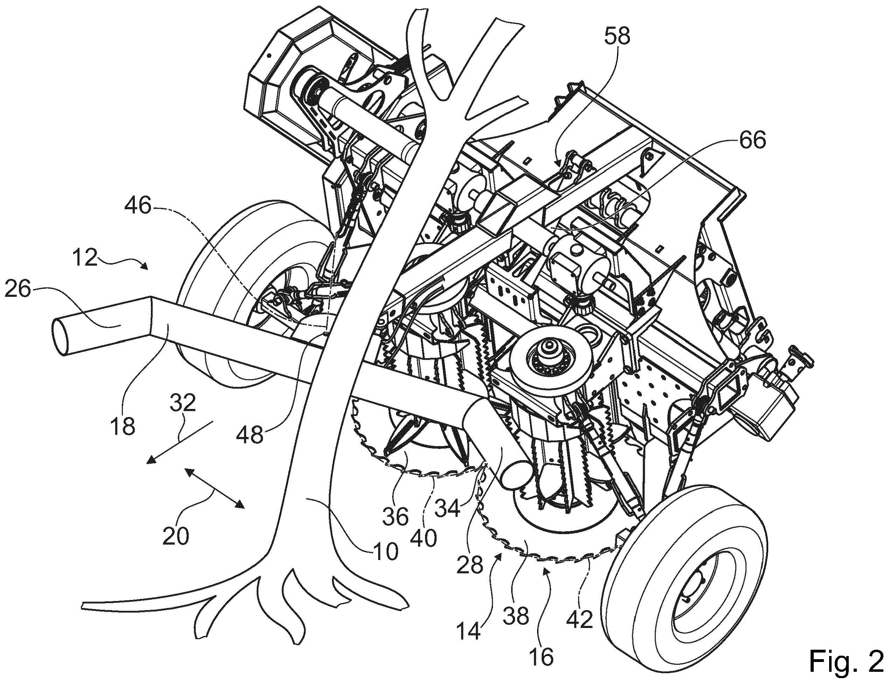

Wie in der Figur 2 dargestellt, weist die Erntevorrichtung eine Sägeeinheit 16 auf. Die Sägeeinheit 16 ist dazu vorgesehen, die verwurzelten Kurzumtriebsgewächse 10 abzusägen. Die verwurzelten Kurzumtriebsgewächse 10 werden dabei in Bodennähe abgesägt. Die Sägeeinheit 16 weist zwei rotierende Sägeblätter 36, 38 auf. Die Sägeblätter 36, 38 schneiden entlang eines jeweiligen Sägekreises 40, 42. Die Sägekreise 40, 42 überschneiden sich teilweise. Genauer gesagt überschneiden sich die Sägekreise 40, 42 in einer Projektionsebene betrachtet, die parallel zu jeweiligen Schnittebenen der Sägeblätter 36, 38 verläuft. Einer der Schnittpunkte der Sägekreise 40, 42 bildet einen Mittelpunkt 34 der Sägeeinheit 16. Die Schnittebenen der Sägeblätter 36, 38 verlaufen parallel zueinander. Drehachsen der Sägeblätter 36, 38 verlaufen parallel und versetzt zueinander. Die Sägekreise 40, 42 grenzen einen Sägebereich 14 der Sägeeinheit 16 ab. Die Erntevorrichtung weist eine Gewächsführungseinheit 12 auf. Die Gewächsführungseinheit 12 ist zu einem Auslenken der Kurzumtriebsgewächse 10 vor dem Sägebereich 14 der Sägeeinheit 16 vorgesehen.

Die Gewächsführungseinheit 12 umfasst ein Auslenkmittel 18. Das Auslenkmittel 18 ist zu einem Auslenken und Vorspannen der Kurzumtriebsgewächse 10 vor dem Sägebereich 14 der Sägeeinheit 16 in eine Querrichtung 20 vorgesehen. Das Auslenkmittel 18 ist zu einer Auslenkung der Kurzumtriebsgewächse 10 weg von einer Mittelachse 30 vorgesehen. Die Mittelachse 30 verläuft parallel zu einer Hauptbewegungsrichtung 32. Die Mittelachse 30 verläuft durch den Mittelpunkt 34 der Sägeeinheit 16.

Wie in der Figur 1 gezeigt, ist das Auslenkmittel 18 dazu vorgesehen, die unmittelbar zu sägenden Kurzumtriebsgewächse 10 von dem übrigen Bestand 44 wegzudrücken. Die Gewächsführungseinheit 12 ist dazu vorgesehen, vor einem Sägevorgang in Anlage mit den Kurzumtriebsgewächsen 10 in einem Bereich zu kommen, der von einem hier nicht gezeigten Erdboden aus betrachtet oberhalb der Schnittebenen der Sägeblätter 36, 38 angeordnet ist. Das Auslenkmittel 18 ist rohrförmig ausgebildet. Das Auslenkmittel 18 bildet somit ein Rohr aus. Das Auslenkmittel 18 ist aus einem Stahl ausgebildet. Es sind in diesem Zusammenhang auch andere, dem Fachmann als sinnvoll erscheinende Materialien für das Auslenkmittel 18 denkbar, wie insbesondere Edelstahl, Eisen, Aluminium und/oder Kunststoff. Das Auslenkmittel 18 weist zwei abgekröpfte Enden 26, 28 auf. Die Enden 26, 28 sind teilweise in Hauptbewegungsrichtung 32 abgewinkelt.

Das Auslenkmittel 18 kann auch auf eine andere, dem Fachmann als sinnvoll erscheinende Weise ausgebildet sein, wie insbesondere durch eine Haspel, eine Schnecke, eine Querförderkette und/oder eine Walze (hier nicht näher gezeigt). Die Haspel, die Schnecke, die Querförderkette und/oder die Walze ist dabei motorisch antreibbar oder frei drehbar ausgebildet. Die Haspel, die Schnecke, die Querförderkette und/oder die Walze kann dabei in einem Normalbetrieb und in einem Reversierbetrieb betrieben werden.

Die Gewächsführungseinheit 12 weist ein Haltemittel 54 auf. Das Haltemittel 54 ist von einem Rechteckrohr gebildet. Das Haltemittel 54 ist in einem weiteren Haltemittel 56 der Gewächsführungseinheit 12 eingeschoben. Das weitere Haltemittel 56 ist ebenfalls von einem Rechteckrohr gebildet. Die Haltemittel 54, 56 sind zueinander teleskopartig verschiebbar gelagert. Das Haltemittel 54 schließt mit einem Boden einen spitzen Winkel ein. Ferner ist ein Winkel zwischen dem Haltemittel 54 und dem Boden über einen Verstellantrieb 58 verstellbar. Bei einer Verstellung des Winkels zwischen dem Haltemittel 54 und dem Boden ändert sich ein Abstand der Gewächsführungseinheit 12 vom Boden. Der Verstellantrieb 58 ist hydraulisch antreibbar ausgebildet. Der Verstellantrieb 58 weist einen Hydraulikzylinder 66 auf.

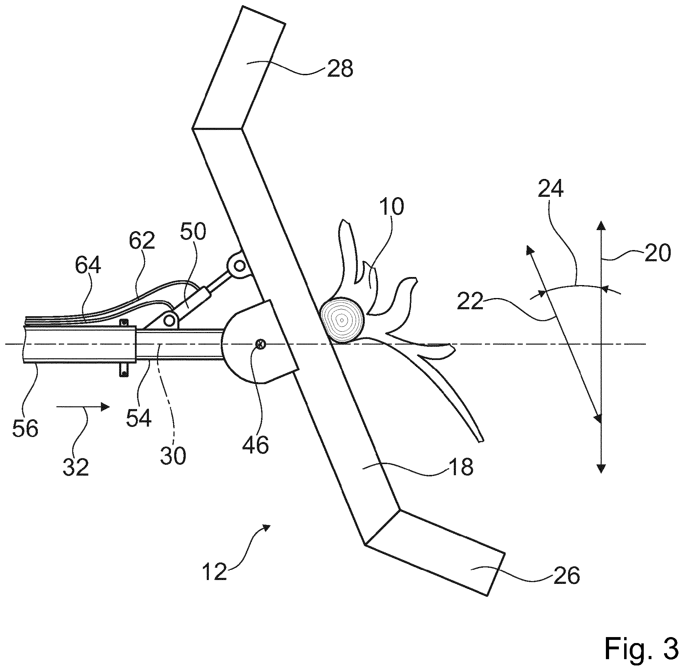

Wie in der Figur 3 näher gezeigt, schließt das Auslenkmittel 18 in einer Haupterstreckungsrichtung 22 einen spitzen Winkel 24 zur Querrichtung 20 ein. Im gezeigten Ausführungsbeispiel beträgt der Winkel 24 etwa 24°. Der Winkel 24 zwischen der Haupterstreckungsrichtung 22 des Auslenkmittels 18 und der Querrichtung 20 ist einstellbar. Der Winkel 24 zwischen der Haupterstreckungsrichtung 22 des Auslenkmittels 18 und der Querrichtung 20 ist zwischen 0° und 70° einstellbar. Ein an dem Auslenkmittel 18 anliegendes Kurzumtriebsgewächs 10 wird teilweise in die Hauptbewegungsrichtung 32 und teilweise in die Querrichtung 20 ausgelenkt. Das Auslenkmittel 18 ist schwenkbar ausgebildet. Genauer gesagt ist das Auslenkmittel 18 um eine Hochachse 46 schwenkbar ausgebildet. Zusätzlich ist das Auslenkmittel 18 um eine Querachse schwenkbar ausgebildet. Die Gewächsführungseinheit 12 weist ein Schwenklager 48 auf. An dem Schwenklager 48 ist das Auslenkmittel 18 schwenkbar gelagert. Das Schwenklager 48 ist an dem Haltemittel 54 fest angeordnet.

Das Auslenkmittel 18 ist relativ zum Haltemittel 54 motorisch schwenkbar ausgebildet. Genauer gesagt ist das Auslenkmittel 18 hydraulisch verstellbar ausgebildet. Die Gewächsführungseinheit 12 weist einen Hydraulikzylinder 50 auf. Es ist in diesem Zusammenhang denkbar, dass die Gewächsführungseinheit 12 mehrere Hydraulikzylinder zur Verstellung des Auslenkmittels 18 aufweist. Besonders vorteilhaft weist die Gewächsführungseinheit 12 jedoch genau einen Hydraulikzylinder 50 auf. Der Hydraulikzylinder 50 ist zu einem Verschwenken des Auslenkmittels 18 relativ zum Haltemittel 54 vorgesehen. Der Hydraulikzylinder 50 ist über Hydraulikleitungen 62, 64 angeschlossen. Eine hier nicht näher gezeigte Steuerungseinheit ist zu einer Fernbedienung der Gewächsführungseinheit 12 durch einen Bediener vorgesehen. Insbesondere umfasst die Steuerungseinheit einen Bedienhebel.

## Patentansprüche

1. Erntevorrichtung, insbesondere zu einer Ernte von Kurzumtriebsgewächsen (10), mit einer Gewächsführungseinheit (12), die zu einem Auslenken der Kurzumtriebsgewächse (10) vor einem Sägebereich (14) einer Sägeeinheit (16) vorgesehen ist, wobei die Gewächsführungseinheit (12) zumindest ein Auslenkmittel (18) umfasst, das zu einem Auslenken und Vorspannen der Kurzumtriebsgewächse (10) vor dem Sägebereich (14) der Sägeeinheit (16) in eine Querrichtung (20) vorgesehen ist,
**dadurch gekennzeichnet, dass**
das zumindest eine Auslenkmittel (18) zu einer Auslenkung der Kurzumtriebsgewächse (10) weg von einer Mittelachse (30), die parallel zu einer Hauptbewegungsrichtung (32) und durch einen Mittelpunkt (34) der Sägeeinheit (16) verläuft, vorgesehen ist.

2. Erntevorrichtung nach Anspruch 1,
**dadurch gekennzeichnet, dass**
das zumindest eine Auslenkmittel (18) in einer Haupterstreckungsrichtung (22) einen spitzen Winkel (24) zur Querrichtung (20) einschließt.

3. Erntevorrichtung nach Anspruch 1 oder 2,
**dadurch gekennzeichnet, dass**
das zumindest eine Auslenkmittel (18) rohrförmig ausgebildet ist.

4. Erntevorrichtung nach einem der vorhergehenden Ansprüche,
**dadurch gekennzeichnet, dass**
das zumindest eine Auslenkmittel (18) zumindest ein abgekröpftes Ende (26, 28) aufweist.

5. Erntevorrichtung nach einem der vorhergehenden Ansprüche,
**dadurch gekennzeichnet, dass**
das zumindest eine Auslenkmittel (18) schwenkbar ausgebildet ist.

6. Erntevorrichtung nach Anspruch 5,
**dadurch gekennzeichnet, dass**
das zumindest eine Auslenkmittel (18) motorisch schwenkbar ausgebildet ist.

7. Erntevorrichtung nach Anspruch 5 oder 6,
**dadurch gekennzeichnet, dass**
der Winkel (24) zwischen der Haupterstreckungsrichtung (22) des Auslenkmittels (18) und der Querrichtung (20) einstellbar ist.

8. Erntevorrichtung zumindest nach Anspruch 5,
**dadurch gekennzeichnet, dass**
das zumindest eine Auslenkmittel (18) hydraulisch verstellbar ausgebildet ist.

9. System mit einer Erntevorrichtung nach einem der vorhergehenden Ansprüche, mit einer Steuerungseinheit, die zu einer Fernbedienung der Gewächsführungseinheit (12) durch einen Bediener vorgesehen ist.

## Claims

1. Harvesting device, in particular for harvesting short-rotation plants (10), with a plant guiding unit (12) that is configured for a deflection of the short-rotation plants (10) in front of a saw region (14) of a saw unit (16), wherein the plant guiding unit (12) comprises at least one deflection means (18) that is configured for a deflection and pre-tension of the short-rotation plants (10), in a transversal direction (20), in front of the saw region (14) of the saw unit (16),
**characterised in that** the at least one deflection means (18) is configured for a deflection of the short-rotation plants (10) away from a middle axis (30) that extends parallel to a main extension direction (32) and through a center point (34) of the saw unit (16).

2. Harvesting device according to claim 1,
**characterised in that** the at least one deflection means (18) includes in a main extension direction (22) an acute angle (24) with the transversal direction (20).

3. Harvesting device according to claim 1 or 2,
**characterised in that** the at least one deflection means (18) is embodied tube-shaped.

4. Harvesting device according to one of the preceding claims,
**characterised in that** the at least one deflection means (18) comprises at least one elbow end (26, 28).

5. Harvesting device according to one of the preceding claims,
**characterised in that** the at least one deflection means (18) is embodied to be pivotable.

6. Harvesting device according to claim 5,
**characterised in that** the at least one deflection means (18) is embodied to be pivotable by means of a motor.

7. Harvesting device according to claim 5 or 6,
**characterised in that** the angle (24) included by the main extension direction (22) of the deflection means (18) and the transversal direction (20) is adjustable.

8. Harvesting device at least according to claim 5,
**characterised in that** the at least one deflection means (18) is embodied to be hydraulically adjustable.

9. System with a harvesting device according to one of the preceding claims, with a control unit that is configured for remote control of the plant guiding unit (12) by an operator.

## Revendications

1. Dispositif de récolte, en particulier pour une récolte des plantes à courte rotation (10), avec une unité de guidage de plantes (12) configurée à défléchir les plantes à courte rotation (10) au-devant d'une zone de sciage (14) d'une unité de sciage (16), où l'unité de guidage de plantes (12) comporte au moins un moyen à déflexion (18), qui est configuré pour une déflexion et précontrainte, en direction transversale (20), des plantes à courte rotation (10) au-devant de la zone de sciage (14) de l'unité de sciage (16),
**caractérisé en ce que** l'au moins un moyen à déflexion (18) est configuré pour une déflexion des plantes à courte rotation (10) d'un axe central (30) s'étendant en parallèle à une direction de mouvement principale (32) et par le centre (34) de l'unité de sciage (16).

2. Dispositif de récolte selon la revendication 1,
**caractérisé en ce que** l'au moins un moyen à déflexion (18) inclut en direction d'extension principale (22) un angle aigu (24) par rapport à la direction transversale (20).

3. Dispositif de récolte selon l'une quelconque des revendications 1 ou 2,
**caractérisé en ce que** l'au moins un moyen à déflexion (18) est réalisé en forme de tube.

4. Dispositif de récolte selon l'une quelconque des revendications précédentes,
**caractérisé en ce que** l'au moins un moyen de déflexion (18) comporte au moins une extrémité coudée (26, 28).

5. Dispositif de récolte selon l'une quelconque des revendications précédentes,
**caractérisé en ce que** l'au moins un moyen de déflexion (18) est réalisé de façon pivotable.

6. Dispositif de récolte selon la revendication 5,
**caractérisé en ce que** l'au moins un moyen de déflexion (18) est réalisé à être pivotable par moteur.

7. Dispositif de récolte selon l'une quelconque des revendications 5 ou 6,
**caractérisé en ce que** l'angle (24) entre la direction d'extension principale (22) du moyen de déflexion (18) et la direction transversale (20) est ajustable.

8. Dispositif de récolte au moins selon la revendication 5,
**caractérisé en ce que** l'au moins un moyen de déflexion (18) est réalisé à être ajustable hydrauliquement.

9. Système avec un dispositif de récolte selon l'une quelconque des revendications précédentes, avec une unité de commande configurée pour une commande à distance de l'unité de guidage de plantes (12) par un opérateur.
